(19) Europäisches Patentamt
European Patent Office
Office européen des brevets

(11) **EP 4 605 484 B1**

(12) **EUROPEAN PATENT SPECIFICATION**

(45) Date of publication and mention
of the grant of the patent:
**03.06.2026   Bulletin 2026/23**

(21) Application number: **22829648.9**

(22) Date of filing: **10.11.2022**

(51) International Patent Classification (IPC):
*C09J 175/04* (2006.01)    *H01M 50/00* (2021.01)
*B32B 7/12* (2006.01)    *B32B 15/18* (2006.01)
*C08G 18/10* (2006.01)    *C08G 18/12* (2006.01)
*C08G 18/32* (2006.01)    *C08G 18/36* (2006.01)
*C08G 18/42* (2006.01)    *C08G 18/48* (2006.01)
*C08G 18/50* (2006.01)    *C08G 18/76* (2006.01)
*C08G 18/79* (2006.01)

(52) Cooperative Patent Classification (CPC):
(C-Sets available)
**C09J 175/04; B32B 7/12; B32B 15/043;
C08G 18/10; C08G 18/12; C08G 18/3206;
C08G 18/36; C08G 18/4208; C08G 18/4236;
C08G 18/4288; C08G 18/4825; C08G 18/5045;
C08G 18/5084; C08G 18/7664; C08G 18/7671;**
(Cont.)

(86) International application number:
**PCT/CN2022/131081**

(87) International publication number:
**WO 2024/098320 (16.05.2024 Gazette 2024/20)**

(54) **POLYURETHANE ADHESIVE**

POLYURETHANKLEBSTOFF

ADHÉSIF DE POLYURÉTHANE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**27.08.2025   Bulletin 2025/35**

(73) Proprietor: **Dow Global Technologies LLC**
**Midland, MI 48674 (US)**

(72) Inventors:
• **FAN, Yanbin**
**Shanghai 201203 (CN)**
• **ZHANG, Yi**
**Shanghai 201203 (CN)**
• **QIU, Qihang**
**Shanghai 201203 (CN)**
• **ZHANG, Ping**
**Shanghai 201203 (CN)**
• **FENG, Shaoguang**
**Shanghai 201203 (CN)**

(74) Representative: **Beck Greener LLP**
**Fulwood House**
**12 Fulwood Place**
**London WC1V 6HR (GB)**

(56) References cited:
EP-A1- 0 250 717        WO-A1-2011/109720
WO-A1-2015/168670    WO-A1-2018/222298
CN-A- 109 609 081

(52) Cooperative Patent Classification (CPC): (Cont.)
**C08G 18/797; H01M 50/244; H01M 50/262;**
Y02E 60/10

C-Sets
**C08G 18/10, C08G 18/6666;**
**C08G 18/12, C08G 18/6696**

**Description**

**Field of Disclosure**

Embodiments of the present disclosure are directed towards an adhesive and in particular a polyurethane adhesive.

**Background**

Economic production of battery packs has been seeing great strides in the past few years as the adoption of electrical vehicles (EV) continues across the world. Due to low cost, low volatility, high body strength and toughness, polyurethane adhesives have emerged as a popular solution to battery pack assembly, where battery cells are bonded together using polyurethane adhesives. The bonding substrates for battery pack assembly mainly include aluminum alloys (Al alloy), polyethylene terephthalate (PET) films and polycarbonate films, among other materials, where bonding Al alloy-Al alloy surface are often the most challenging aspect of the battery pack assembly. Specifically, achieving effective bonding between Al alloys is difficult due to high surface energy and absence of organic chemical groups on the Al alloy surfaces.

On the other hand, the moisture resistance of the polyurethane components (including polyol and isocyanate parts) is another important industrial need. This is because both the polyol and isocyanate parts easily absorb moisture. For the isocyanate parts, the absorbed moisture leads to reduction of isocyanate (NCO) contents and formation of solid skins starting at the component surfaces. As a result, the reduced NCO contents can cause incorrect feed ratios between the reaction groups and the thick skins can block the storage tanks and/or dispensing tunnels, leading to product defects and production breaks, respectively. For the polyol parts, the absorbed moisture can cause bubbles to form in the adhesives after mixing and/or dispensing. Therefore, the more moisture-resistant the adhesive the better.

To provide moisture resistance, PU adhesives usually incorporate hydrophobic compounds like vegetable oils, OH-terminated polyalkenes, dimeric acid-based polyesters and massive hydrophobic plasticizers. However, these compounds can be high in cost, cause long production cycle time (due to low reactivity) and often lead to inferior bonding strengths for Al alloy - Al alloy interfaces. Therefore, new technologies are needed to solve the industrial challenges and enable advanced adhesive products for batteries, especially those for EV applications. Document CN 109609081 A concerns a polyurethane adhesive for power battery pack structure bonding.

**Summary**

The present disclosure provides for a polyurethane adhesive that includes both an isocyanate prepolymer and a polyol component, which while being low cost still provide for high reactivity for effective bonding of Al alloy - Al alloy interfaces. Such a polyurethane adhesive as provided herein may, therefore, be beneficial for helping solve the industrial challenges and enable advanced adhesive products for batteries, especially those for EV applications.

The present disclosure provides for a polyurethane adhesive that includes an isocyanate prepolymer and a polyol component, where the isocyanate prepolymer is the reaction product of 35 to 95 weight percent (wt.%) of a polyisocyanate; and 65 to 5 wt.% of a non-dimeric acid based polyester polyol, where the wt.% is based on the total weight of the isocyanate prepolymer and the wt.% of the polyisocyanate and the non-dimeric acid based polyester polyol do not total more than 100 wt.%. For the various embodiments, the non-dimeric acid based polyester polyol comprises a reaction product of a primary polyol having a hydroxyl functionality of at least 3 and a weight average molecular weight 800 g/mol or less, a C4 to C20 non-dimeric acid dicarboxylic acid and a C10 to C20 aliphatic mono-carboxylic acid, where the aliphatic mono-carboxylic acid and the primary polyol have a molar ratio of greater than 0.9:1 to 6.5:1 (mono-carboxylic acid : polyol) and the aliphatic mono-carboxylic acid is present in the isocyanate prepolymer in a range of greater than 7.2 to 55 wt.% based on the total weight of the isocyanate prepolymer. The polyol component includes 20 to 80 wt.% of a hydrophobic polyol; 3 to 15 wt.% of a phosphate modified polyol; and 10 to 30 wt.% of a vegetable oil polyurethane polyol, where the wt.% is based on the total weight of the polyol component and the wt.% of the hydrophobic polyol, the phosphate modified polyol and the vegetable oil polyurethane polyol do not total more than 100 wt.%.

**Detailed Description**

The present disclosure provides for a polyurethane adhesive that includes both an isocyanate prepolymer and a polyol component, which while being low cost still provide for high reactivity for effective bonding of Al alloy - Al alloy interfaces. Such a polyurethane adhesive as provided herein may, therefore, be beneficial for helping solve the industrial challenges and enable advanced adhesive products for batteries, especially those for EV applications.

The numerical ranges disclosed herein include all values from, and including, the lower and upper value. For ranges containing explicit values (e.g., a range from 1, or 2, or 3 to 5, or 6, or 7), any subrange between any two explicit values is included (e.g., the range 1-7 above includes subranges 1 to 2; 2 to 6; 5 to 7; 3 to 7; 5 to 6; *etc.*).

An isocyanate that contains more than one, or at least two, isocyanate groups is a "polyisocyanate." An isocyanate may be aromatic or aliphatic.

For the various embodiments, the present disclosure provides for a polyurethane adhesive that is the reaction product of an isocyanate prepolymer and a polyol component. As provided herein, the isocyanate prepolymer is a reaction product of a polyisocyanate and a non-dimeric acid based polyester polyol, as discussed herein. The polyol component comprises a hydrophobic polyol, a phosphate modified polyol and a vegetable oil polyurethane polyol, as discussed herein. The polyol component may optionally comprise a polyether polyol. Each of the various components is discussed as follows.

**Polyol Component**

For the various embodiments, the polyol component includes 20 to 80 weight percent (wt.%) of a hydrophobic polyol; 3 to 15 wt.% of a phosphate modified polyol; and 10 to 30 wt.% of a vegetable oil polyurethane polyol, where the wt.% is based on the total weight of the polyol component and the wt.% of the hydrophobic polyol, the phosphate modified polyol and the vegetable oil polyurethane polyol do not total more than 100 wt.%. Preferably, the polyol component includes 24 to 40 wt.% of the hydrophobic polyol; 6 to 11 wt.% of the phosphate modified polyol; and 11 to 20 wt.% of the vegetable oil polyurethane polyol, where the wt.% is based on the total weight of the polyol component and the wt.% of the hydrophobic polyol, the phosphate modified polyol and the vegetable oil polyurethane polyol do not total more than 100 wt.%. Most preferably, the polyol component includes 25 to 30 wt.% of the hydrophobic polyol; 7 to 9 wt.% of the phosphate modified polyol; and 11 to 15 wt.% of the vegetable oil polyurethane polyol, where the wt.% is based on the total weight of the polyol component and the wt.% of the hydrophobic polyol, the phosphate modified polyol and the vegetable oil polyurethane polyol do not total more than 100 wt.%.

**Hydrophobic polyol**

A hydrophobic polyol for the polyol component refers to a hydrophobic polyol with at least two hydroxyl groups. In an embodiment, the hydrophobic polyol is castor oil or its derivatives. The polyol component comprises 20 to 80 wt.%, preferably 22 to 60 wt.%, more preferably 24 to 40 wt.%, even more preferably 25 to 30 wt.% of the hydrophobic polyol, preferably castor oil, based on the total weight of the polyol component.

**Phosphate modified polyol**

Phosphate modified polyol for the polyol component is preferably a phosphate modified polyol, more preferably, a phosphate ester polyol. The phosphate ester polyol can be made from a tri-functional propylene glycol, a polyphosphoric acid, and a polyisocyanate. Commercially available examples of the tri-functional propylene glycol include products sold under the trade names VORANOL™ CP-450, VORANOL™ CP-260, VORANOL™ CP-755, and VORANOL™ CP-1055, each available from The Dow Chemical Company. In some embodiments, the phosphate ester polyol has a phosphoric acid content of less than 4 wt.% based on the weight of the phosphate ester polyol, or a phosphoric acid content of from 0 to 3 wt.% based on the weight of the phosphate ester polyol, or a phosphoric acid content of from 1.5 to 2.5 wt.% based on the weight of the phosphate ester polyol. In some embodiments, the phosphate ester polyol has a viscosity less than 40,000 cps at 25 °C, or less than 30,000 cps at 25 °C, as measured by the method of ASTM D21 96. In some embodiments, the phosphate ester polyol has a hydroxyl equivalent weight less than 330 g/mol. In some embodiments, the phosphate ester polyol has from 0 to 100 wt.%, based on the weight of the phosphate ester polyol, of a tri-functional polyether polyol having an equivalent weight less than 2,000 g/mol. The polyol component comprises 3 to 15 wt.%, preferably 4 to 13 wt.%, more preferably 5 to 12 wt.%, even more preferably 6 to 11 wt.%, and most preferably 7 to 9 wt.% of the phosphate modified polyol, preferably a phosphate ester polyol, based on the total weight of the polyol component.

**Vegetable Oil Polyurethane Polyol**

The vegetable oil polyurethane polyol for the polyol component is a reaction product of a reaction mixture of a vegetable oil containing a hydrophobic polyol with at least two hydroxyl groups, a polyisocyanate and a polyol. The polyisocyanate may chemically bind to a polyol to form a prepolymer. Nonlimiting examples of suitable polyisocyanates include aromatic isocyanates, aliphatic isocyanates, carbodiimide modified polyisocyanates, and the combinations thereof.

An "aromatic polyisocyanate" is a polyisocyanate containing one or more aromatic rings. Nonlimiting examples of suitable aromatic polyisocyanates include isomers of methylene diphenyl dipolyisocyanate (MDI) such as 4,4-MDI, 2,4-MDI and 2,2'-MDI; or modified MDI such as carbodiimide modified MDI or allophanate modified MDI; isomers of toluene-dipolyisocyanate (TDI) such as 2,4-TDI, 2,6-TDI; isomers of naphthalene-dipolyisocyanate (NDI) such as 1,5-NDI; and combinations thereof.

An "aliphatic polyisocyanate" is a polyisocyanate that the isocyanate moiety (-NCO) is not direct connect to aromatic rings. Nonlimiting examples of suitable aliphatic polyisocyanates include isomers of hexamethylene dipolyisocyanate (HDI), isomers of isophorone dipolyisocyanate (IPDI), isomers of xylene dipolyisocyanate (XDI), other cycloaliphatic isocyanates such as methylene bis-cyclohexylisocyanate (hydrogenated MDI)(HMDI) and cyclohexane diisocyanate, and combinations thereof.

In an embodiment, the polyisocyanate is selected from a mono-polyisocyanate, a di-polyisocyanate, a tri-polyisocyanate, and combinations thereof. In a further embodiment, the polyisocyanate is a di-polyisocyanate. In an embodiment, the polyisocyanate is a multifunctional polyisocyanate with at least two isocyanate groups, or at least three isocyanate groups. In an embodiment, the polyisocyanate is selected from MDI, TDI, HDI, and combinations thereof. In a further embodiment, the polyisocyanate is MDI. Commercially available examples of the polyisocyanate suitable for use according to this disclosure include products sold under the trade names ISONATE™ OP 50, ISONATE™ 125M and ISONATE™ M 143 Modified MDI, each available from The Dow Chemical Company.

The polyol for preparing the vegetable oil polyurethane polyol can be a polyester polyol, a polyether polyol or the combination thereof, preferably, a polyether polyol. A "polyether polyol" is a compound that is a polyether and a polyol. Nonlimiting examples of suitable polyether polyols include polyaddition products of ethylene oxide, propylene oxide, tetrahydrofuran, butylene oxide, and the co-addition and grafted products thereof; the polyether polyols obtained by condensation of polyhydric alcohols, or mixtures thereof; and combination thereof.

Nonlimiting examples of suitable polyether polyols include polypropylene glycol (PPG), polyethylene glycol (PEG), polybutylene glycol, polytetramethylene ether glycol (PTMEG), and combinations thereof. In an embodiment, the polyether polyol is polypropylene glycol (PPG). Nonlimiting examples of a suitable polypropylene glycol include the product sold under the trade name VORANOL™ P-400 available from The Dow Chemical Company.

Nonlimiting examples of suitable polyether polyols include VORANOL™ 1010 L, a PPG; and VORANOL™ CP450, a glycerine propoxylated polyether triol, each available from The Dow Chemical Company.

In an embodiment, the polyether polyol has a Mw from 50 g/mol, or 100 g/mol, or 400 g/mol, or 450 g/mol to 1,000 g/mol, or 1,500 g/mol, or 2,000 g/mol, or 4,000 g/mol, or 5,000 g/mol. In an embodiment, the polyether polyol has a hydroxyl number from 30 mg KOH/g, or 50 mg KOH/g, or 75 mg KOH/g, or 100 mg KOH/g to 115 mg KOH/g, or 125 mg KOH/g, or 150 mg KOH/g, or 200 mg KOH/g, or 300 mg KOH/g, or 350 mg KOH/g, or 400 mg KOH/g, or 450 mg KOH/g, or 500 mg KOH/g. In an embodiment, the polyethyer polyol has one or both of the following properties: (i) a Mw from 50 g/mol to 5,000 g/mol, or from 100 g/mol to 2,000 g/mol, or from 400 g/mol to 1,500 g/mol, or from 400 g/mol to 1,000 g/mol; and/or (ii) a hydroxyl number from 30 mg KOH/g to 500 mg KOH/g, or from 100 mg KOH/g to 400 mg KOH/g, or from 100 mg KOH/g to 150 mg KOH/g, or from 350 mg KOH/g to 400 mg KOH/g.

In some embodiments, the vegetable oil containing a hydrophobic polyol with at least two hydroxyl groups can be castor oil or its derivatives.

The vegetable oil polyurethane polyol can be formed from the reaction product of the vegetable oil containing the hydrophobic polyol with at least two hydroxyl groups, the polyisocyanate and the polypropylene glycol. Suitable reactions included mixing under an inert atmosphere (e.g., nitrogen) 8 to 26 wt.% of the polyisocyanate, 40 to 50 wt.% of the vegetable oil containing the hydrophobic polyol with at least two hydroxyl groups and 40 to 50 wt.% of the polypropylene glycol (where the total weight of the polyisocyanate, the vegetable oil containing the hydrophobic polyol with at least two hydroxyl groups and the polypropylene glycol do not exceed 100 wt.%) at a temperature of 40 to 100 °C for 1 to 5 hours. The polyol component comprises 10 to 30 wt.%, preferably 11 to 25 wt.%, more preferably 11 to 20 wt.%, and most preferably 11 to 15 wt.%, of the vegetable oil polyurethane polyol based on the total weight of the polyol component.

**Polyether Polyol**

The polyol component may further comprise a polyether polyol. Nonlimiting examples of suitable polyether polyols include polyaddition products of ethylene oxide, propylene oxide, tetrahydrofuran, butylene oxide, and the co-addition and grafted products thereof; the polyether polyols obtained by condensation of polyhydric alcohols, or mixtures thereof; and combination thereof. Nonlimiting examples of suitable polyether polyols include polypropylene glycol (PPG), polyethylene glycol (PEG), polybutylene glycol, polytetramethylene ether glycol (PTMEG), and combinations thereof. In an embodiment, the polyether polyol is polypropylene glycol (PPG). Nonlimiting examples of suitable polyether polyols include VORANOL™ 1010 L, a PPG; and VORANOL™ CP450, a glycerine propoxylated polyether triol, each available from The Dow Chemical Company.

In an embodiment, the polyether polyol has a Mw from 50 g/mol, or 100 g/mol, or 400 g/mol, or 450 g/mol to 1,000 g/mol, or 1,500 g/mol, or 2,000 g/mol, or 4,000 g/mol, or 5,000 g/mol. In an embodiment, the polyether polyol has a hydroxyl number from 30 mg KOH/g, or 50 mg KOH/g, or 75 mg KOH/g, or 100 mg KOH/g to 115 mg KOH/g, or 125 mg KOH/g, or 150 mg KOH/g, or 200 mg KOH/g, or 300 mg KOH/g, or 350 mg KOH/g, or 400 mg KOH/g, or 450 mg KOH/g, or 500 mg KOH/g. In an embodiment, the polyethyer polyol has one or both of the following properties: (i) a Mw from 50 g/mol to 5,000 g/mol, or from 100 g/mol to 2,000 g/mol, or from 400 g/mol to 1,500 g/mol, or from 400 g/mol to 1,000 g/mol; and/or (ii) a hydroxyl number from 30 mg KOH/g to 500 mg KOH/g, or from 100 mg KOH/g to 400 mg KOH/g, or from 100 mg KOH/g to 150 mg KOH/g, or from 350 mg KOH/g to 400 mg KOH/g.

The polyol component comprises 5 to 20 wt.%, preferably 7 to 18 wt.%, more preferably 9 to 15 wt.%, even more preferably 10 to 14 wt.% of polyether polyol based on the total weight of the polyol component.

## Chain Extenders

The polyol component may optionally comprise a chain extender. Nonlimiting examples of suitable chain extenders include glycerine; trimethylol propane; diethylene glycol; propanediol; 2-methyl-1, 3-propanediol; 1,4-butanediol (1,4-BDO); and combinations thereof, preferably 1,4-BDO. The polyol component comprises 1 to 20 wt.%, preferably 2 to 15 wt.%, more preferably 4 to 10 wt.%, even more preferably 2 to 6 wt.% of chain extenders, preferably, 1,4- BDO, based on the total weight of the polyol component.

The polyol component can optionally comprise moisture scavengers, catalysts, flame retardants, rheology modifiers and fillers as are known in the art.

## Isocyanate Prepolymer

The isocyanate prepolymer of the present disclosure comprises the reaction product of a polyisocyanate and a non-dimeric acid based polyester polyol. For the various embodiments, the isocyanate prepolymer is the reaction product of 35 to 95 wt.% of a polyisocyanate and 65 to 5 wt.% of a non-dimeric acid based polyester polyol, where the wt.% is based on the total weight of the isocyanate prepolymer and the wt.% of the polyisocyanate and the non-dimeric acid based polyester polyol do not total more than 100 wt.%. Preferably, the isocyanate prepolymer is the reaction product of 55 to 85 wt.% of the polyisocyanate and 45 to 15 wt.% of the non-dimeric acid based polyester polyol, where the wt.% is based on the total weight of the isocyanate prepolymer and the wt.% of the polyisocyanate and the non-dimeric acid based polyester polyol do not total more than 100 wt.%. More preferably, the isocyanate prepolymer is the reaction product of 60 to 80 wt.% of the polyisocyanate and 40 to 20 wt.% of the non-dimeric acid based polyester polyol, where the wt.% is based on the total weight of the isocyanate prepolymer and the wt.% of the polyisocyanate and the non-dimeric acid based polyester polyol do not total more than 100 wt.%.

Polyisocyanate

The polyisocyanate may chemically react with the non-dimeric acid based polyester polyol form a prepolymer. Nonlimiting examples of suitable polyisocyanates include aromatic isocyanates, aliphatic isocyanates, carbodiimide modified polyisocyanates and combinations thereof, each as described herein.

Nonlimiting examples of suitable aromatic polyisocyanates include polymeric MDI and isomers of MDI , such as 4,4-MDI, 2,4-MDI and 2,2'-MDI; or modified MDI such as polycarbodiimide modified diphenylmethane diisocyanate or allophanate modified MDI; toluene diisocyanate, isomers of toluene-dipolyisocyanate (TDI) such as 2,4-TDI, 2,6-TDI; isomers of naphthalene-dipolyisocyanate (NDI) such as 1,5-NDI; and combinations thereof.

Nonlimiting examples of suitable aliphatic polyisocyanates include isomers of HDI, isophorone diisocyanate, IPDI, XDI, other cycloaliphatic isocyanates such as 4,4'-methylenedicyclohexyl diisocyanate, methylene bis-cyclohexylisocyanate (hydrogenated MDI or HMDI) and cyclohexane diisocyanate, and combinations thereof.

In an embodiment, the polyisocyanate is selected from a mono-polyisocyanate, a di-polyisocyanate, a tri-polyisocyanate, and combinations thereof. In a further embodiment, the polyisocyanate is a di-polyisocyanate. In an embodiment, the polyisocyanate is selected from MDI, TDI, HDI, and combinations thereof. In a further embodiment, the polyisocyanate is MDI. In an embodiment, the polyisocyanate is selected from carbodiimide modified MDI, carbodiimide modified TDI, carbodiimide modified HDI, and combinations thereof. In a further embodiment, the polyisocyanate is carbodiimide modified MDI.

For the various embodiments, the polyisocyanate can be selected from the group consisting of polycarbodiimide-modified diphenylmethane diisocyanate, MDI, TDI, isophorone diisocyanate, 4,4'-methylenedicyclohexyl diisocyanate, polymeric methylene diphenyl diisocyanate and combinations thereof. In one embodiment, the polyisocyanate is polycarbodiimide-modified diphenylmethane diisocyanate.

In an embodiment, the polyisocyanate has an NCO content of no less than 10%, preferably no less than 15%, preferably no less than 20%. For the various embodiments, the isocyanate prepolymer has an isocyanate content of 10 to 29 wt.% as measured according to ASTM D5155.

The polyisocyanate component comprises 35 to 95 wt.%, preferably 45 to 80 wt.%, more preferably 55 to 85 wt.%, even more preferably 60 to 80 wt.% of the isocyanate prepolymer based on the total weight of the isocyanate prepolymer.

## Non-dimeric acid based polyester polyol

A "non-dimeric acid based polyester polyol" is a polyester polyol containing units derived from a primary polyol, a non-dimeric acid dicarboxylic acid and an aliphatic mono-carboxylic acid. In an embodiment, the non-dimeric acid based polyester polyol is the reaction product of (i) a primary polyol having a hydroxyl functionality of at least 3 and a weight average molecular weight 800 g/mol or less, (ii) a C4 to C20 non-dimeric acid dicarboxylic acid, and (iii) a C10 to C20 aliphatic mono-carboxylic acid. For the various embodiments, the aliphatic mono-carboxylic acid and the primary polyol have a molar ratio of greater than 0.9:1 to 6.5:1 (mono-carboxylic acid : primary polyol) and the aliphatic mono-carboxylic acid is present in the isocyanate prepolymer in a range of greater than 7.2 to 55 wt.% based on the total weight of the isocyanate prepolymer.

The non-dimeric acid based polyester polyol can be formed by reacting the primary polyol, the non-dimeric acid dicarboxylic acid, and the aliphatic mono-carboxylic acid, each as provided herein, where the reaction mixture can include 10 to 30 wt.% of the primary polyol(s), 5 to 30 wt.% of the non-dimeric acid dicarboxylic acid(s) and 50 to 75 wt.% of the aliphatic mono-carboxylic acid(s), where the reaction that includes the primary polyol, the non-dimeric acid dicarboxylic acid, and the aliphatic mono-carboxylic acid totals 100 wt.%. Preferably, the reaction mixture includes 15 to 27 wt.% of the primary polyol(s), 10 to 25 wt.% of the non-dimeric acid dicarboxylic acid(s) and 50 to 75 wt.% of the aliphatic mono-carboxylic acid(s), where the reaction that includes the primary polyol, the non-dimeric acid dicarboxylic acid, and the aliphatic mono-carboxylic acid totals 100 wt.%. Most preferably, the reaction mixture includes 17 to 25 wt.% of the primary polyol(s), 12 to 22 wt.% of the non-dimeric acid dicarboxylic acid(s) and 53 to 72 wt.% of the aliphatic mono-carboxylic acid(s), where the reaction that includes the primary polyol, the non-dimeric acid dicarboxylic acid, and the aliphatic mono-carboxylic acid totals 100 wt.%.

For the various embodiments, the reaction mixture that includes the primary polyol, the non-dimeric acid dicarboxylic acid, and the aliphatic mono-carboxylic acid can be mixed with heating to a temperature of 90 to 250 °C. Acid values for the reaction mixture are preferably less than 10, where a catalyst can be used in the reaction mixture. Suitable catalysts include, for example, titanium(IV) butoxide, tetra-n-butyl orthotitanate and titanium(IV) tert-butoxide.

For the various embodiments, the non-dimeric acid based polyester polyol has a hydroxyl functionality of 1.8 to 2.3. For the various embodiments, the non-dimeric acid based polyester polyol has an acid value of 5 mg KOH/g or less as measured according to ASTM D974.

The non-dimeric acid based polyester polyol component comprises 65 to 5 wt.%, preferably 55 to 20 wt.%, more preferably 45 to 15 wt.%, even more preferably 40 to 20 wt.% of the isocyanate prepolymer based on the total weight of the isocyanate prepolymer.

## Primary Polyol

For the various embodiments, the primary polyol has a functionality of at least 3 and a weight average molecular weight of 800 g/mol or less. For the various embodiments, the primary polyol is selected from the group consisting of glycerol, diglycerol, triglycerol, trimethylolpropane, di(trimethylolpropane), pentaerythritol, dipentaerythritol, tripentaerythritol, sorbitol, their derivatives like alkoxylates, or combinations thereof. The polyol may comprise two or more embodiments disclosed herein.

## Non-Dimeric Acid dicarboxylic acid

Nonlimiting examples of suitable non-dimeric acid dicarboxylic acids include aliphatic acids, aromatic acids, and combinations thereof. Preferably, the non-dimeric acid dicarboxylic acid is a C4 to C20 non-dimeric acid dicarboxylic acid. More preferably, the non-dimeric acid dicarboxylic acid is a C4 to C10 non-dimeric acid dicarboxylic acid. Nonlimiting examples of suitable aromatic dicarboxylic acids for use as the non-dimeric acid dicarboxylic acids include phthalic acid, iso-phthalic acid, and terephthalic acid. Nonlimiting examples of suitable aliphatic dicarboxylic acids for use as the non-dimeric acid dicarboxylic acids include cyclohexane dicarboxylic acid, adipic acid, azelaic acid, sebacic acid, glutaric acid, maleic acid, fumaric acid, itaconic acid, suberic acid, 2-methyl succinic acid, 3,3-diethyl glutaric acid and 2,2-dimethyl succinic acid. As used herein, the term "acid" also includes any anhydrides of said acid. Saturated aliphatic and/or aromatic acids are also suitable, such as adipic acid or iso-phthalic acid, for use as the non-dimeric acid dicarboxylic acid. For the various embodiments, the non-dimeric acid dicarboxylic acid is selected from the group consisting of adipic acid, iso-phthalic acid and combinations thereof.

In an embodiment, the non-dimeric acid dicarboxylic acid has from four, or five, or six to seven, or eight, or nine, or ten carbon atoms. In another embodiment, the non-dimeric acid dicarboxylic acid has from four to ten carbon atoms, or from six to eight carbon atoms. In a further embodiment, the non-dimeric acid dicarboxylic acid has eight carbon atoms.

The non-dimeric acid dicarboxylic acid may comprise two or more embodiments disclosed herein.

**Aliphatic mono-carboxylic acid**

For the various embodiments, the aliphatic mono-carboxylic acid is a C10 to C20 aliphatic mono-carboxylic acid. Preferably, the aliphatic mono-carboxylic acid is a C12 to C18 aliphatic mono-carboxylic acid. For the various embodiments, the aliphatic mono-carboxylic acid can be selected from the group consisting of oleic acid, stearic acid, lauric acid and combinations thereof. The non-dimeric acid may comprise two or more embodiments disclosed herein.

**Optional Additive**

In an embodiment, the isocyanate prepolymer of the present disclosure comprises the reaction product of the polyisocyanate, the non-dimeric acid based polyester polyol and, optionally, an additive. Nonlimiting examples of suitable optional additives include adhesion promoters, chain extenders, catalysts, and combinations thereof. A nonlimiting example of a suitable adhesion promoter is aminosilane. Nonlimiting examples of suitable chain extenders include glycerine; trimethylol propane; diethylene glycol; propanediol; 2-methyl-1, 3-propanediol; and combinations thereof. Nonlimiting examples of suitable catalysts include tetra-n-butyl titanate, zinc sulphate, organic tin catalyst, and combinations thereof. The optional additive may comprise two or more embodiments disclosed herein. In an embodiment, the reaction mixture excludes a chain extender.

The isocyanate prepolymer can optionally include plasticizers, flame retardants, adhesion promoters, rheology modifiers, fillers or the like. Plasticizers, such as diisononyl phalate, help reduce the skinning accumulated during the application of isocyanate prepolymer.

Flame retardants, such as isopropylated phosphate phenol, can help to improve fire resistance. Conventional adhesion promoters, such as epoxy silanes, can also be used. Rheology modifiers, such as fumed silica, are often included in the adhesive composition to provide the thixotropic properties for different application needs. In isocyanate prepolymer, fume silica with hydrophobic surface treatment is often used as a rheology modifier. Fillers are added in the adhesive composition to improve the mechanical strength and lower the cost. Fillers can be selected from silica, $CaCO_3$, kaolin and talc, among others known in the art.

The mixture for preparing the reaction product of (i) a polyisocyanate and (ii) a non-dimeric acid based polyester polyol typically comprises 60-95 wt.%, preferably 65-85 wt.%, more preferably 70-80 wt.%, of aromatic isocyanates and 5-40 wt.%, preferably 15-35 wt.%, more preferably 20-30 wt.%, of non-dimeric acid based polyester polyol, based on the total weight of the mixture for preparing the reaction product of (i) a polyisocyanate and (ii) a non-dimeric acid based polyester polyol.

The isocyanate prepolymer typically comprises 30 to 100 wt.%, preferably 35 to 95 wt.%, more preferably 40 to 90 wt.%, even more preferably 40 to 80 wt.% or 50 to 75 wt.% or 60 to 75 wt.% of the reaction product of (i) a polyisocyanate and (ii) a non-dimeric acid based polyester polyol, and optionally 0 to 20 wt.%, preferably 1 to 10 wt.%, more preferably 0.5 to 8 wt.%, even more preferably 1 to 5 wt.% or 2 to 4 wt.% of plasticizers, 0 to 20 wt.%, preferably 0.1 to 10 wt.%, more preferably 0.5 to 8 wt.%, even more preferably 0.8 to 5 wt.% or 1 to 3 wt.% flame retardants, 0 to 10%, preferably 1 to 8 wt.%, more preferably 0.5 to 6 wt.%, even more preferably 0.8 to 5 wt.% or 1 to 4 wt.% of adhesion promoters, 0 to 10 wt %, preferably 0.5 to 8 wt.%, even more preferably 1 to 5 wt.% or 2 to 4 wt.% of rheology modifiers and 0 to 70 wt %, preferably 5 to 65 wt.%, more preferably 10 to 50 wt.%, even more preferably 18 to 45 wt.% or 20 to 40 wt.% or 20 to 30wt.% of fillers, based on the total weight of the isocyanate prepolymer.

**Polyurethane adhesive**

The polyurethane adhesive is free of, or substantially free of, a solvent. In an embodiment, the polyurethane adhesive contains an optional conventional additive. The optional additive may be any optional additive disclosed herein, such as plasticizers, chain extenders, flame retardants, adhesion promoters, rheology modifiers, fillers, moisture scavengers, catalysts and the like.

The polyurethane adhesive is formed by mixing the polyol component and the isocyanate prepolymer under conditions suitable to react the -NCO groups of the isocyanate prepolymer with the hydroxyl groups of the polyol component. In an embodiment, the polyol component and the isocyanate prepolymer are combined and mixed via static mixing equipment or dynamic mixing equipment at a temperature from 15 °C to 55 °C.

The Isocyanate Index or ("NCO Index") is the molar ratio of isocyanate groups in the isocyanate prepolymer to the amount of hydroxyl groups in the polyol component. Isocyanate groups can be measured according to ASTM D2572. The NCO Index is calculated in accordance with the following Equation (2):

$$NCO\ Index = \frac{(Isocyanate\ Component\ NCO\ wt\%/42) \times mix\ ratio}{(Hydroxyl\ Value\ of\ Polyol\ Component/56106)} \qquad \text{Equation (2)}$$

In an embodiment, the polyurethane adhesive has an NCO Index from 1.00, or 1.05, or 1.10, or 1.15 to 1.85, or 1.60, or 1.50, or 1.40. In another embodiment, the polyurethane adhesive has an NCO Index from 1.05 to 1.85, or from 1.10 to 1.60, or from 1.15 to 1.50, or from 1.15 to 1.40.

In an embodiment, the polyurethane adhesive includes the polyol component and the isocyanate prepolymer at an Isocyanate prepolymer: Polyol component volume ratio from 120:100 to 80:100, or from 115:100 to 90:100, or from 110:100 to 95:100, or from 105:100 to 98: 100. The polyurethane adhesive may comprise two or more embodiments disclosed herein.

**Multi-layer structure**

The present disclosure provides a multi-layer structure. The multi-layer structure includes a first substrate, a second substrate, and an adhesive layer between the first substrate and the second substrate. The adhesive layer is formed from the polyurethane adhesive as provided herein. The first substrate and the second substrate may be the same or different. It is understood that the description herein referring to a "substrate" refers to the first substrate and the second substrate, individually and/or collectively.

A nonlimiting example of a suitable substrate is a film. The film may be a monolayer film or a multilayer film. The multilayer film contains two layers, or more than two layers. In an embodiment, the film is a monolayer film with one, and only one, layer. In an embodiment, the film includes a layer containing a component selected from ethylene-based polymer (PE), propylene-based polymer (PP), polyamide (such as nylon), polyester, ethylene vinyl alcohol (EVOH) copolymer, polyethylene terephthalate (PET), ethylene vinyl acrylate (EVA) copolymer, ethylene methyl acrylate copolymer, ethylene ethyl acrylate copolymer, ethylene butyl acrylate copolymer, ethylene acrylic acid copolymer, ethylene methacrylic acid copolymer, an ionomer of ethylene acrylic acid, an ionomer of methacrylic acid, maleic anhydride grafted ethylene-based polymer, a polylactic acid (PLA), a polystyrene, a metal foil, a cellulose, cellophane, nonwoven fabric, and combinations thereof. Each layer of a multilayer film may for formed from the same component, or from different components.

In an embodiment, the film includes a layer containing metal foil. A nonlimiting example of a suitable metal foil is aluminum foil.

In an embodiment, the film is a monolayer film having a single layer that is an ethylene-based polymer layer. In a further embodiment, the film is a monolayer film having a single layer that is a polyethylene layer.

The substrate, and further the film, is a continuous structure with two opposing surfaces.

In an embodiment, the substrate has a thickness from 5 μm, or 10 μm, or 12 μm, or 15 μm, or 20 μm, or 21 μm to 23 μm, or 24 μm, or 25 μm, or 30 μm, or 35 μm, or 40 μm, or 45 μm, or 50 μm, or 100 μm, or 150 μm, or 200 μm, or 250 μm, or 300 μm, or 350 μm, or 400 μm, or 450 μm, or 500 μm.

In an embodiment, the substrate excludes cellulose-based substrates, such as paper and wood.

In an embodiment, the first substrate is a monolayer film having a single layer that is a PE layer; and the second substrate is a film having a layer that is a metal foil layer.

The film may comprise two or more embodiments disclosed herein. The first substrate may comprise two or more embodiments disclosed herein. The second substrate may comprise two or more embodiments disclosed herein.

The polyurethane adhesive is applied between the first substrate and the second substrate, such as with a Nordmeccanica Labo Combi 400 laminator. Nonlimiting examples of suitable application methods include brushing, pouring, spraying, coating, rolling, spreading, and injecting. In an embodiment, the polyurethane adhesive is applied between the first substrate and the second substrate at a temperature from 20°C, or 30 °C, or 40°C to 50 °C, or 60 °C, or 70 °C, or 80 °C, or 90 °C.

In an embodiment, the polyurethane adhesive is uniformly applied between the first substrate and the second substrate. A "uniform application" is a layer of the composition that is continuous (not intermittent) across a surface of the substrate, and of the same, or substantially the same, thickness across the surface of the substrate. In other words, a composition that is uniformly applied to a substrate directly contacts the substrate surface, and the composition is coextensive with the substrate surface.

In an embodiment, the polyurethane adhesive is cured in an oven at a temperature from 10 °C, 20 °C, or 35 °C to 40 °C, or 45 °C, or 50 °C. In an embodiment, the polyurethane adhesive is cured at a temperature from 20°C to 30°C, preferably 25°C, for a period of from 1 day to 2 days, or 4 days, or 7 days or 10 days.

In an embodiment, the first substrate is a monolayer film having a single layer that is a metal foil layer and the second substrate is a monolayer film having a single layer that is a metal foil layer, and the multi-layer structure has a lap shear strength of from 7 MPa, or 7.5 MPa, or 8 MPa to 15 MPa, or 13 MPa, or 12 MPa, and/or has a cross tensile strength of from 6.5 MPa, or 7.0 MPa, or 7.5 MPa to 15 MPa, or 13 MPa, or 12 MPa.

In an embodiment, the first substrate is a monolayer film having a single layer that is a metal foil layer and the second substrate is a film having a layer that is a metal foil layer, and the multi-layer structure has a mean value of adhesive shear strength on lap-joints at 3σ level of >7 MPa or 7.5 MPa, or 8 MPa to 15 MPa, or 13 MPa, or 12 MPa and a mean value of adhesive tensile strength on butt-joints at 3σ level of from 6.5 MPa, or 6.7, or 7.0 MPa, or 7.5 MPa to 15 MPa, or 13 MPa, or 12 MPa.

The various embodiments of the present disclosure also include a battery comprising the polyurethane adhesive of the present disclosure. Examples include lithium-ion batteries, as are known in the art.

By way of example, and not limitation, some embodiments of the present disclosure will now be described in detail in the following Examples.

## EXAMPLES

The examples below are provided to be illustrative only and are not intended to define or limit the embodiments in any way. In the Inventive Examples (IE) and Comparative Examples (CE), various terms and designations for materials are used including, for instance, the following:

**Table 1. Materials**

| Category | Chemical Name | Specification | Supplier |
|---|---|---|---|
| Polyol | Castor Oil | OH value 163, density 0.961 g/cm$^3$, functionality 2.7 | Guangzhou Hanhao Chemcial Co. Ltd. |
| Polyol | VORANOL™ CP450 | Polyether polyol, OH value 373, density 1.01 g/cm$^3$, functionality 3 | The DOW Chemical Company |
| Polyol | VORANOL™ P400 | Polyether polyol, OH value 260, density 1.01 g/cm$^3$, functionality 2 | The DOW Chemical Company |
| Chain Extender | 1,4-BDO | Molecular weight 90, density 1.01 g/cm$^3$, functionality 2 | SinoChem Group Co. Ltd. |
| Diacid | Isophthalic acid | Molecular weight 166.13, functionality 2 | Sigma-Aldrich |
| Diacid | Adipic acid | Molecular weight 146.14, functionality 2 | Sigma-Aldrich |
| Aliphatic Mono-Carboxylic Acid | Oleic acid | Molecular weight 282.46, functionality 2 | Sigma-Aldrich |
| Aliphatic Mono-Carboxylic Acid | Stearic acid | Molecular weight 284.48, functionality 2 | Sigma-Aldrich |
| Dimeric Acid | ATUREX® 1001 | Acid value 194-200, dibasic acid>98% | ATUREX Chemicals |
| Diol | 2-Methyl-1,3 -Propane diol | Molecular weight 90 | Sigma-Aldrich |
| Diol | 1,6-Hexanediol | Molecular weight 118 | Sigma-Aldrich |
| Tetraol | Pentaerythrotol | Molecular weight 136.14 | Sigma-Aldrich |
| Triol | Trimethylolpropane | Molecular weight 134.14 | Sigma-Aldrich |
| Catalyst | Tyzor® TBT | Density 1.00 g/cm$^3$, CAS No. 5593-70-4 | Sigma-Aldrich |
| Isocyanate | ISONATE™ 143L | Carbodiimide modified MDI. NCO content 29 wt.%, functionality 2 | The DOW Chemical Company |
| Isocyanate | ISONATE™ OP 50 | NCO content 33.5 wt.%, functionality 2 | The DOW Chemical Company |
| Isocyanate | ISONATE™ 125M | NCO content 33.5 wt.%, functionality 2 | The DOW Chemical Company |

(continued)

| Category | Chemical Name | Specification | Supplier |
|---|---|---|---|
| Adhesion Promoter | Phosphate Modified Polyol | OH value 295, density 1.3 g/cm$^3$ | As described herein |
| Adhesion Promoter | 3-Glycidoxypropyl Trimethoxysilane, Z-6040 | Density 1.07 g/cm$^3$ | The DOW Chemical Company |
| Silane Coupling Agent | (3-Glycidyloxypropyl) trimethoxysilane (KH560) | | Sigma-Aldrich |
| Plasticizer | DINP (Diisononyl Phalate) | Density 0.975 g/cm$^3$ | Zhuhai Liancheng Chemical Co. Ltd. |
| Moisture Scavenger | Molecular Sieve 3A | Density 2.1 g/cm$^3$ | W.R. GRACE & Co. |
| Rheology Modifier | Fumed silica, AEROSIL® R 974 | Hydrophobically modified, density 2.1 g/cm$^3$ | EVONIK Industries AG |
| Adhesion Promoter | 3-Glycidoxypropyl Trimethoxysilane, Z-6040 | Density 1.07 g/cm$^3$ | The DOW Chemical Company |
| Filler | Calcium Carbonate | Density 2.93 g/cm$^3$ | Omya |
| Moisture Scavenger | Molecular Sieve 3A | Density 2.1 g/cm$^3$ | W.R. GRACE & Co. |
| Filler | Boron Nitride | Density 2.25 g/cm$^3$ | Compagnie de Saint-Gobain S.A. |

Synthesis of Dimeric Acid/2-Methyl-1,3-Propane Diol Based Polyester Polyol-1 (DMP-PE). 50 grams (g) 2-methyl-1,3-propane diol, 233.8 g dimeric acid (ATUREX® 1001) are charged into a 500 ml glass reactor and mixed completely. The mixture was heated to 100 °C. When the raw materials turn to liquid, then start agitation. Control the temperature on the proper position and monitor it through the whole process. If the top temperature of glass condenser increases above 103 °C, start cooling the reactor as soon as possible. When the reaction temperature increases to 220 °C, top temperature falls below 100 °C, start vacuum slowly in 30 minutes to 30mm Hg. Check the acid value every 30 minutes. Add catalyst Tyzor® TBT until the acid value of the reacting mixture are less than 10 after which maintain the reaction system at 30 mm Hg vacuum condition for more than 1 hour until the OH value reaches theoretical value. Cool the resulting mixture to 60-70 °C and collect final product as DMP-PE.

Synthesis of Adipic Acid/2-Methyl-1,3-Propane Diol Based Polyester Polyol (AMP-PE). 100 g of 2-methyl-1,3-propane diol and 146.4 g of adipic acid were reacted as described for (DFMP-PE). The final product was collected as AMP-PE.

Synthesis of Adipic Acid/Trimethylolpropane/Oleic Acid Based Polyester Polyol (ATO-PE-1). 97.4 g trimethylolpropane, 80.5 g adipic acid, 205.0 g oleic acid were reacted as described for (DFMP-PE). The final product was collected as ATO-PE-1.

Synthesis of Adipic Acid/Trimethylolpropane/Oleic Acid Based Polyester Polyol (ATO-PE-2). 101.4 g trimethylolpropane, 83.8 g adipic acid, 198.0 g oleic acid were reacted as described for (DFMP-PE). The final product was collected as ATO-PE-2.

Synthesis of Adipic Acid/2-Mehtyl-1,3-Propane diol/Trimethylolpropane/Oleic Acid Based Polyester Polyol (ATO-PE-3). 69.9 g trimethylolpropane, 126.7 g adipic acid, 147.1 g oleic acid, 47.0 g 2-mehtyl-1,3-propane diol were reacted as described for (DFMP-PE). The final product was collected as ATO-PE-3.

Synthesis of Adipic Acid/Trimethylolpropane/Oleic Acid/Stearic acid Based Polyester Polyol (ATOS-PE). 95.5 g trimethylolpropane, 78.4 g adipic acid, 100.5 g oleic acid, 101.2 g stearic acid were reacted as described for (DFMP-PE). The final product was collected as ATOS-PE.

Synthesis of Adipic Acid/Pentaerythritol/Oleic Acid Based Polyester Polyol (APO-PE). 64.9 g pentaerythritol, 44.0 g adipic acid, 269.1 g oleic acid were reacted as described for (DFMP-PE). The final product was collected as APO-PE.

Synthesis of Adipic Acid/Iso-Phthalic Acid/Trimethylolpropane/Oleic Acid Based Polyester Polyol (AITO-PE). 96.0 g trimethylolpropane, 39.5 g adipic acid, 44.9 g iso-phthalic acid, 202.0 g oleic acid were reacted as described for (DFMP-PE). The final product was collected as AITO-PE.

Synthesis of Phosphate Modified Polyol

The synthesis of phosphate modified polyol was described in Example 5 of WO2015/168670 A1, which is incorporated herein by reference in its entirety. A 1 liter (L) multi-neck round bottom flask was dried in an oven, flushed with dry $N_2$ for 30 minutes, then charged with VORANOL™ CP 450 polyether polyol (150g) and placed under an $N_2$ sweep of 70 mL/min. A syringe was loaded with 115 % Polyphosphoric acid (PPA) (4g, ALDRICH CHEMICAL Co.). The PPA was added dropwise to the polyether polyol with strong agitation. A minimal temperature increase was observed. The reactor contents were heated to 100 °C for 1 hour, then cooled to 45 °C. ISONATE™ 125M polyisocyanate (50g) was added. The temperature rose to about 95 °C from the heat of reaction. Also, there was an increase in viscosity and development of a yellow color. The reactor was then brought to 65 °C, and ethyl acetate (40g) was added to cut viscosity and improve stirring. After 1 hour, the reactor was cooled and the content was packaged (viscosity: 42,750 mPa.s).

Synthesis of Caster Oil Polyurethane Polyol (COP Polyol): The COP Polyol was synthesized in 1,000 ml glass reactor as normal polyurethane pre-polymer preparation process. 12 g ISONATE™ OP 50 was charged into reactor and keep them at 60 °C with nitrogen protection, then 44 g castor oil and 44 g VORANOL™ P 400 were charged into reactor to mix with ISONATE™ OP 50. Increase the temperature to 80 °C slowly and hold for 2 hours. The resulting COP Polyol (vegetable oil polyurethane polyol) was charged into a well-sealed container with nitrogen protection for further use.

Synthesis of NCO-terminated Prepolymer of DMP-PE (Pre-DMP): 75 g ISONATE™ 143L was charged into 1,000 ml glass reactor and keep them at 60 °C with nitrogen protection, then 25 g DMP-PE was charged into reactor to mix with ISONATE™ 143L. Increase the temperature to 80 °C slowly and hold for 2-3 hour until NCO content meet the theoretical value. The resulting Pre-DMP was charged into well sealed container with nitrogen protection for further application.

Synthesis of NCO-terminated Prepolymer of AMP-PE (Pre-AMP):

75 g ISONATE™ 143L was charged into 1,000ml glass reactor and keep them at 60 °C with nitrogen protection, then 25 g AMP-PE was charged into reactor to mix with ISONATE™ 143L. Increase the temperature to 80 °C slowly and hold for 2-3 hours until NCO content meet the theoretical value. The resulting Pre-AMP was charged into well sealed container with nitrogen protection for further application.

Synthesis of NCO-terminated Prepolymer of ATO-PE-1 (Pre-ATO1): 75 g ISONATE™ 143L was charged into 1,000ml glass reactor and keep them at 60 °C with nitrogen protection, then 25 g ATO-PE-1 was charged into reactor to mix with ISONATE™ 143L. Increase the temperature to 80 °C slowly and hold for 2-3 hours until NCO content meet the theoretical value. The resulting Pre-ATO1 was charged into well sealed container with nitrogen protection for further application.

Synthesis of NCO-terminated Prepolymer of ATO-PE-2 (Pre-ATO2): 75 g ISONATE™ 143L was charged into 1,000ml glass reactor and keep them at 60 °C with nitrogen protection, then 25 g ATO-PE-2 was charged into reactor to mix with ISONATE™ 143L. Increase the temperature to 80 °C slowly and hold for 2-3 hours until NCO content meet the theoretical value. The resulting Pre-ATO2 was charged into well sealed container with nitrogen protection for further application.

Synthesis of NCO-terminated Prepolymer of ATO-PE-3 (Pre-ATO3): 75 g ISONATE™ 143L was charged into 1,000ml glass reactor and keep them at 60 °C with nitrogen protection, then 25 g ATO-PE-3 was charged into reactor to mix with ISONATE™ 143L. Increase the temperature to 80 °C slowly and hold for 2-3 hours until NCO content meet the theoretical value. The resulting Pre-ATO3 was charged into well sealed container with nitrogen protection for further application.

Synthesis of NCO-terminated Prepolymers of ATOS-PE (Pre-ATOS): 75 g ISONATE™ 143L was charged into 1,000ml glass reactor and keep them at 60 °C with nitrogen protection, then 25 g ATOS-PE was charged into reactor to mix with ISONATE™ 143L. Increase the temperature to 80 °C slowly and hold for 2-3 hours until NCO content meet the theoretical value. The resulting Pre-ATOS was charged into well sealed container with nitrogen protection for further application.

Synthesis of NCO-terminated Prepolymers of APO-PE (Pre-APO): 75 g ISONATE™ 143L was charged into 1,000ml glass reactor and keep them at 60 °C with nitrogen protection, then 25 g APO-PE was charged into reactor to mix with ISONATE™ 143L. Increase the temperature to 80 °C slowly and hold for 2-3 hours until NCO content meet the theoretical value. The resulting Pre-APO was charged into well sealed container with nitrogen protection for further application.

Synthesis of NCO-terminated Prepolymers of AITO-PE (Pre-AITO): 75 g ISONATE™ 143L was charged into 1,000ml glass reactor and keep them at 60 °C with nitrogen protection, then 25 g AITO-PE was charged into reactor to mix with ISONATE™ 143L. Increase the temperature to 80 °C slowly and hold for 2-3 hours until NCO content meet the theoretical value. The resulting Pre-AITO was charged into well sealed container with nitrogen protection for further application.

The inventive examples (IE) were designed in two steps: (1): Isocyanate Prepolymer (Part, which can meet moisture-resistance requirements, are summarized in Table 2. (2) Adhesive Examples, which include Part A and Part B, are summarized in Table 3.

CE-A showed good hydrophobicity, but the cost and cycle time for preparing the polyester polyol are high (20 h). CE-B showed poor moisture-resistance (only 7 h). IE-1 showed good moisture-resistance (14 h), lower time for preparing the polyester (11 h) and lowered cost relative to CE-A due to introduction of the aliphatic mono-carboxylic acid (e.g., 10.1 wt.% incorporation based on iso component). CE-C showed failure for synthesizing the prepolymer due to reduction of molar ratio between the aliphatic mono-carboxylic acid and the small molecular weight and high functional polyol from 1.00 (IE-1) to 0.93. Therefore, CE-C provides a boundary of the molar ratio between the aliphatic mono-carboxylic acid and the polyol. CE-D showed poor moisture-resistance of the isocyanate prepolymer due to reduction of the aliphatic mono-carboxylic acid from 10.1 wt.% incorporation based on isocyanate prepolymer (IE-1) to 7.2 wt.% based on the isocyanate prepolymer. Therefore, CE-D provides a boundary of the weight ratio of the aliphatic mono-carboxylic acid in the isocyanate prepolymer.

IE-2, IE-3 and IE-4 all showed good moisture resistance as well as lowered time for preparing polyester polyol and low raw material cost of the polyester polyols due to significant inclusion of the long chain and aliphatic mono-carboxylic acids (9.9 ~ 11.2 wt.% based on the isocyanate prepolymer) and the molar ratio between the aliphatic mono-carboxylic acid and the polyol (1.00 ~ 2.00).

**Table 2. Isocyanate Prepolymer**

| NCO-Terminated Prepolymer in Part B | | CE-A | CE-B | IE-1 | CE-C | CE-D | IE-2 | IE-3 | IE-4 |
|---|---|---|---|---|---|---|---|---|---|
| Isocyanate Prepolymer | Pre-DMP | 68.80 | | | | | | | |
| | Pre-AMP | | 68.80 | | | | | | |
| | Pre-ATO1 | | | 68.80 | | | | | |
| | Pre-ATO2 | | | | Gelled, NA | | | | |
| | Pre-ATO3 | | | | | 68.80 | | | |
| | Pre-ATOS | | | | | | 68.80 | | |
| | Pre-APO | | | | | | | 68.80 | |
| | Pre-AITO | | | | | | | | 68.80 |
| | DINP | 3.92 | 3.92 | 3.92 | NA | 3.92 | 3.92 | 3.92 | 3.92 |
| | KH560 | 2.00 | 2.00 | 2.00 | NA | 2.00 | 2.00 | 2.00 | 2.00 |
| | Aerosil® R974 | 4.00 | 4.00 | 4.00 | NA | 4.00 | 4.00 | 4.00 | 4.00 |
| | CaCO$_3$ | 21.28 | 21.28 | 21.28 | NA | 21.28 | 21.28 | 21.28 | 21.28 |
| Total | | 100 | 100 | 100 | NA | 100 | 100 | 100 | 100 |
| Tacky Free Time, h (requirement ≥14 h) | | 15 | 7 | 14 | NA | 12 | 14 | 16 | 15 |
| Time for preparing polyester polyol (h, the less the better) | | 20 | 9 | 11 | 11 | 10 | 11 | 12 | 12 |
| | | | | | | | | | |
| Aliphatic Mono-Carboxylic Acid weight ratio in Iso-component (%) | | 0.0 | 0.0 | 10.1 | 9.7 | 7.2 | 9.9 | 13.2 | 9.9 |
| Molar Ratio (aliphatic mono-carboxylic acid /high function short polyol) in iso-component | | NA | NA | 1.00 | 0.93 | 1.00 | 1.00 | 2.00 | 1.00 |

The adhesive formulations, with details in Part A and the corresponding examples of Part B, are summarized in Table 3. The volume mixing ratio and stoichiometric ratio were calculated and are listed in Table 3. CE-E showed unsatisfactory lap shear strength (10.14 MPa < 10.5 MPa) due to introduction of dimeric acid in the applied isocyanate of CE-A. CE-F showed increased and satisfactory lap shear strength (10.87 MPa > 10.5 MPa) due to replacement of dimeric acid with adipic acid, but the moisture resistance was unacceptable as it applied the isocyanate prepolymer of CE-B. CE-G showed satisfactory lap shear strength (11.72 MPa > 10.5 MPa) due to replacement of dimeric acid with adipic acid, but the moisture-resistance of the applied isocyanate prepolymer CE-D was poor due to reduced inclusion of the long chain and aliphatic mono-carboxylic acid. IE-5 showed good lap shear strength (11.91 MPa > 10.5 MPa) due to replacement of dimeric acid with adipic acid, and good moisture-resistance of the applied isocyanate prepolymer IE-1, as well as short time for preparing polyester polyol and low cost of the polyester polyol due to the use of the aliphatic mono-carboxylic acid (10.1 wt.% incorporation based on iso component). By comparing IE-5 with CE-H, the removal of phosphate modified polyol leads to poor lap shear strength (9 MPa << 10.5 MPa). Therefore, phosphate modified polyol helps with achieving high lap shear strength. By comparing IE- 5 with CE-I, the removal of COP polyol (the vegetable oil polyurethane polyol) leads to poor lap shear strength (10.24 MPa < 10.5 MPa). Therefore, to achieve high lap shear strength, vegetable oil polyurethane polyol should be present in the formulation. IE-6, IE-7 and IE-8 incorporating the IE-2, IE-3 and IE-4 isocyanate prepolymers showed good lap shear strength (12.00 ~ 14.29 MPa > 10.5 MPa) due to inclusion of phosphate modified polyol and the COP polyol (vegetable oil polyurethane polyol), where the applied isocyanate prepolymers show good moisture resistance as well as short time for preparing polyester polyol and low raw material cost of the polyester polyols due to significant inclusion of the aliphatic mono-carboxylic acids (9.9 ~ 11.2 wt.% based on the isocyanate prepolymer) and the molar ratio between the aliphatic mono-carboxylic acid and high functional short polyol (1.00 ~ 2.00).

**Table 3. Adhesive Examples**

| | | CE-E | CE-F | CE-G | IE-5 | CE-H | CE-I | IE-6 | IE-7 | IE-8 |
|---|---|---|---|---|---|---|---|---|---|---|
| Polyol Component (Part A) | | | | | | | | | | |
| Castor Oil | | 27.73 | 27.73 | 27.73 | 27.73 | 28.15 | 40 | 27.73 | 27.73 | 27.73 |
| Voranol™ CP450 | | 7.82 | 7.82 | 7.82 | 7.82 | 13 | 8.14 | 7.82 | 7.82 | 7.82 |
| COP polyol | | 12.59 | 12.59 | 12.59 | 12.59 | 12.59 | 0 | 12.59 | 12.59 | 12.59 |
| 1,4-BDO | | 3.55 | 3.55 | 3.55 | 3.55 | 3.55 | 3.55 | 3.55 | 3.55 | 3.55 |
| Phosphate-modified polyol | | 5.60 | 5.60 | 5.60 | 5.60 | 0 | 5.60 | 5.60 | 5.60 | 5.60 |
| Molecular Sieve 3A | | 7.39 | 7.39 | 7.39 | 7.39 | 7.39 | 7.39 | 7.39 | 7.39 | 7.39 |
| Aerosil® R974 | | 2.37 | 2.37 | 2.37 | 2.37 | 2.37 | 2.37 | 2.37 | 2.37 | 2.37 |
| $CaCO_3$ | | 32.95 | 32.95 | 32.95 | 32.95 | 32.95 | 32.95 | 32.95 | 32.95 | 32.95 |
| | | | | | | | | | | |
| Total | | 100 | 100 | 100 | 100 | 100 | 100 | 100 | 100 | 100 |
| | | | | | | | | | | |
| Isocyanate Prepoly (Part B) | | | | | | | | | | |
| CE-A | Pre-DMP | 102.0 | | | | | | | | |
| CE-B | Pre-AMP | | 102.0 | | | | | | | |
| CE-D | Pre-ATO3 | | | 102 | | | | | | |
| IE-1 | Pre-ATO1 | | | | 102 | 103 | 103 | | | |
| IE-2 | Pre-ATOS | | | | | | | 102 | | |
| IE-3 | Pre-APO | | | | | | | | 102 | |
| IE-4 | Pre-AITO | | | | | | | | | 102 |
| | | | | | | | | | | |
| ISO Index, NCO/OH | | 1.21 | 1.21 | 1.21 | 1.21 | 1.21 | 1.21 | 1.21 | 1.21 | 1.21 |
| Volume ratio, B/A | | 1.00 | 1.00 | 1.00 | 1.00 | 1.00 | 1.00 | 1.00 | 1.00 | 1.00 |
| | | | | | | | | | | |
| Lap-shear Strength, MPa | | 10.14 | 10.87 | 11.72 | 11.91 | 9.00 | 10.24 | 12.00 | 13.05 | 14.29 |
| Tensile Strength, MPa (> 11 MPa) | | 14.14 | 17.90 | 18.42 | 14.57 | 14.63 | 15.15 | 15.24 | 15.63 | 16.74 |
| Elongation at Break, % (> 80%) | | 106 | 150 | 146 | 107 | 119 | 127 | 106 | 118 | 119 |

**Experimental Procedures**

Isocyanate prepolymer (Part was prepared according to the following procedure: Step 1 - Charge NCO-terminated prepolymer into the vessel; then add other liquid components (e.g., DINP, KH560); Step 2 - Apply vacuum and mix with medium stirring rates for 30 min; Step 3 - Charge $CaCO_3$ into the vessel; apply vacuum after powder incorporation; mix with high stirring rates for 30 min; Step 4 - Charge AEROSIL® R974 into the vessel; apply vacuum after powder incorporation; mix with high stirring rates for 1 hour; Step 5 - Set temperature bath to 80 °C; keep mixing with medium to low stirring rates for 30 min to sustain the temperature; Step 6 - Set temperature bath to 20 °C to cool down to less than 40 °C.

Tacky free time was tested following procedure (ASTM C679-03): Take 10 g of the isocyanate prepolymer (Part in a 50 ml Plastic beaker, put the beaker in oven under 45% relative humidity and 23 °C temperature. Start time recording. Periodically take out the beaker and use a plastic stick to touch the surface of the isocyanate prepolymer B softly. With the increasing reaction between the isocyanate prepolymer and moisture, the surface viscosity increases. Stop the time recording when surface of the isocyanate prepolymer is not sticky. The duration is recorded as tacky free time of the isocyanate prepolymer.

Polyol component (Part A) is prepared according to the following procedure: Step 1 - charge castor oil, phosphate modified polyol, COP polyol (vegetable oil polyurethane polyol), Voranol™ CP450, and 1,4-BDO into the vessel; Step 2 - Heat the mixture to 80 °C; apply vacuum and mix with medium stirring rates for 1 hour to de-gas; Step 3 - Charge $CaCO_3$ into the vessel, apply vacuum after powder incorporation; mix with high stirring rates for 15 min; Step 4 - Charge Molecular Sieve 3A into the vessel; apply vacuum after powder incorporation; mix with high stirring rates for 15 min; Step 5 - Charge AEROSIL® R974 into the vessel; apply vacuum after powder incorporation; mix with high stirring rates for 1 hour; Step 6 - Cool down to < 40 °C.

**Test methods:**

Acid values measured according to ASTM D974.

Lap-joint test coupons were made with the following procedure: (1) Substrate was made by 3003 aluminum alloy with a dimension of 25 mm X 12.5 mm. (2) Clean the substrate surface by wiping off with ethanol. (3) Mask out 25 mm X 12 mm bonding area by using pressure sensitive tape. (4) Mix the Part A and Part B of adhesive and put in speedmixer at 1,000 rpm for 1 min to make sure thoroughly mixing. (5) Apply 0.5 g to 1.5 g adhesive in the bonding area of the substrate. Put two copper wires with diameter 0.2 mm to control the thickness of adhesive. (6) Along the length direction, stack another masked substrate with the same bonding area contacted head-to-head. Press and fasten the bonding surfaces with two clippers side by side. (7)Cure the adhesive at 25 °C for 7 days.

Butt-joint test coupons were made based on the following procedure: (1) Substrate was made by 3003 aluminum alloy with a dimension of 60 mm height and 15 mm diameter. (2) Clean the substrate surface by wiping off with ethanol. (3) Mix the Part A and Part B of adhesive and put in speedmixer at 1,000 rpm for 1 min to make sure thoroughly mixing. (4) Apply 0.5 g to 1 g adhesive on the flat surface of substrate. Put two copper wires with diameter 0.25 mm to control the thickness of adhesive. (5) Stack another cleaned substrate with the flat surface bonded together. Keep the stacked substrates vertically so the bonding surfaces can be constantly fastened by gravity force. (6) Cure the adhesive at 25 °C for 7 days.

Test coupons were assembled on the fixture of Instron test machine (Model: Instron 5566) and tested at strain rate of 5 mm/min for shear strength of lap-joints and tensile strength of butt-joints.

**Claims**

1. A polyurethane adhesive, comprising:

   an isocyanate prepolymer comprising a reaction product of

      35 to 95 weight percent (wt.%) of a polyisocyanate; and
      65 to 5 wt.% of a non-dimeric acid based polyester polyol, wherein the wt.% is based on the total weight of the isocyanate prepolymer and the wt.% of the polyisocyanate and the non-dimeric acid based polyester polyol do not total more than 100 wt.%;
      wherein the non-dimeric acid based polyester polyol comprises a reaction product of a primary polyol having a hydroxyl functionality of at least 3 and a weight average molecular weight 800 g/mol or less, a C4 to C20 non-dimeric acid dicarboxylic acid and a C10 to C20 aliphatic mono-carboxylic acid, wherein the aliphatic mono-carboxylic acid and the primary polyol have a molar ratio of greater than 0.9:1 to 6.5:1 (mono-carboxylic acid : primary polyol) and the aliphatic mono-carboxylic acid is present in the isocyanate prepolymer in a range of greater than 7.2 to 55 wt.% based on the total weight of the isocyanate prepolymer; and

a polyol component that includes:

20 to 80 wt.% of a hydrophobic polyol;
3 to 15 wt.% of a phosphate modified polyol; and
10 to 30 wt.% of a vegetable oil polyurethane polyol, wherein the wt.% is based on the total weight of the polyol component and the wt.% of the hydrophobic polyol, the phosphate modified polyol and the vegetable oil polyurethane polyol do not total more than 100 wt.%.

2. The polyurethane adhesive of claim 1, wherein the non-dimeric acid based polyester polyol has a hydroxyl functionality of 1.8 to 2.3.

3. The polyurethane adhesive of any one of claims 1-2, wherein the non-dimeric acid based polyester polyol has an acid value of 5 mg KOH/g or less as measured according to ASTM D974.

4. The polyurethane adhesive of any one of claims 1-3, wherein the aliphatic mono-carboxylic acid is selected from the group consisting of oleic acid, stearic acid, lauric acid and combinations thereof.

5. The polyurethane adhesive of any one of claims 1-4, wherein further including 5 wt.% to 20 wt.% of a polyether polyol.

6. The polyurethane adhesive of any one of claims 1-5, wherein the hydrophobic polyol is castor oil.

7. The polyurethane adhesive of any one of claims 1-6, wherein the polyurethane adhesive has an isocyanate index of 1.05 to 1.85.

8. The polyurethane adhesive of any one of claims 1-7, wherein the non-dimeric acid dicarboxylic acid is selected from the group consisting of adipic acid, iso-phthalic acid and combinations thereof.

9. A multi-layer structure comprising:

a first substrate;
a second substrate; and
an adhesive layer between the first substrate and the second substrate, the adhesive layer formed from the polyurethane adhesive of any one of claims 1-8, wherein the first substrate is a monolayer film having a single layer that is a metal foil layer and the second substrate is a monolayer film having a single layer that is a metal foil layer.

10. A battery comprising the polyurethane adhesive of any one of claims 1-8.

**Patentansprüche**

1. Polyurethanklebstoff, umfassend:

ein Isocyanat-Präpolymer, umfassend ein Reaktionsprodukt von 35 bis 95 Gewichtsprozent (Gew.-%) eines Polyisocyanats; und
65 bis 5 Gew.-% eines auf nicht-dimerer Säure basierenden Polyesterpolyols, wobei das Gew.-% auf dem Gesamtgewicht des Isocyanat-Prepolymers basiert und die Gew.-% des Polyisocyanats und des auf nicht-dimerer Säure basierenden Polyesterpolyols insgesamt nicht mehr als 100 Gew.-% betragen; wobei das nicht-dimere säurebasierte Polyesterpolyol ein Reaktionsprodukt eines primären Polyols mit einer Hydroxylfunktionalität von mindestens 3 und einem Gewichtsmittel des Molekulargewichts von 800 g/mol oder weniger, einer C4 bis C20 nicht-dimeren Säure-Dicarbonsäure und einer C10 bis C20 aliphatischen Monocarbonsäure umfasst, wobei die aliphatische Monocarbonsäure und das primäre Polyol ein Molverhältnis von größer als 0,9:1 bis 6,5:1 (Monocarbonsäure : primäres Polyol) aufweisen und die aliphatische Monocarbonsäure in dem Isocyanat-Prepolymer in einem Bereich von größer als 7,2 bis 55 Gew.-% bezogen auf das Gesamtgewicht des Isocyanat-Prepolymers vorliegt; und
eine Polyolkomponente, die einschließt:

> zu 20 bis 80 Gew.-% ein hydrophobes Polyol;
> zu 3 bis 15 Gew.-% ein phosphatmodifiziertes Polyol; und
> zu 10 bis 30 Gew.-% ein Pflanzenöl-Polyurethanpolyol, wobei das Gew.-% auf dem Gesamtgewicht der Polyolkomponente basiert und die Gew.-% des hydrophoben Polyols, des phosphatmodifizierten Polyols und des Pflanzenöl-Polyurethanpolyols insgesamt nicht mehr als 100 Gew.-% betragen.

2. Polyurethanklebstoff nach Anspruch 1, wobei das nicht-dimere säurebasierte Polyesterpolyol eine Hydroxylfunktionalität von 1,8 bis 2,3 aufweist.

3. Polyurethanklebstoff nach einem der Ansprüche 1 bis 2, wobei das nicht-dimere säurebasierte Polyesterpolyol einen Säurewert von 5 mg KOH/g oder weniger aufweist, gemessen gemäß ASTM D974.

4. Polyurethanklebstoff nach einem der Ansprüche 1 bis 3, wobei die aliphatische Monocarbonsäure ausgewählt ist aus der Gruppe, bestehend aus Ölsäure, Stearinsäure, Laurinsäure und Kombinationen davon.

5. Polyurethanklebstoff nach einem der Ansprüche 1 bis 4, wobei ferner zu 5 Gew.-% bis 20 Gew.-% ein Polyetherpolyol enthalten sind.

6. Polyurethanklebstoff nach einem der Ansprüche 1 bis 5, wobei das hydrophobe Polyol Rizinusöl ist.

7. Polyurethanklebstoff nach einem der Ansprüche 1 bis 6, wobei der Polyurethanklebstoff einen Isocyanatindex von 1,05 bis 1,85 aufweist.

8. Polyurethanklebstoff nach einem der Ansprüche 1 bis 7, wobei die nicht-dimere Säure-Dicarbonsäure ausgewählt ist aus der Gruppe, bestehend aus Adipinsäure, Isophthalsäure und Kombinationen davon.

9. Mehrschichtige Struktur, umfassend:

> ein erstes Substrat;
> ein zweites Substrat; und
> eine Klebstoffschicht zwischen dem ersten Substrat und dem zweiten Substrat, wobei die Klebstoffschicht aus dem Polyurethanklebstoff nach einem der Ansprüche 1 bis 8 gebildet ist, wobei das erste Substrat eine Einschichtfolie ist, die eine einzelne Schicht aufweist, die eine Metallfolienschicht ist, und das zweite Substrat eine Einschichtfolie ist, die eine einzelne Schicht aufweist, die eine Metallfolienschicht ist.

10. Batterie, umfassend den Polyurethanklebstoff nach einem der Ansprüche 1 bis 8.

**Revendications**

1. Adhésif de polyuréthane comprenant :

> un prépolymère d'isocyanate comprenant un produit de réaction de 35 à 95 pour cent en poids (% en poids) d'un polyisocyanate ; et
> 65 à 5 % en poids d'un polyol de polyester à base d'acide non dimérique, dans laquelle le % en poids est basé sur le poids total du prépolymère d'isocyanate et les % en poids du polyisocyanate et du polyol de polyester à base d'acide non dimérique ne totalisent pas plus de 100 % en poids ;
> dans lequel le polyol de polyester à base d'acide non dimérique comprend un produit de réaction d'un polyol primaire ayant une fonctionnalité hydroxyle d'au moins 3 et une masse moléculaire pondérale moyenne de 800 g/mol ou moins, un acide dicarboxylique d'acide non dimérique en C4 à C20 et un acide monocarboxylique aliphatique C10 à C20, dans lequel l'acide mono-carboxylique aliphatique et le polyol primaire ont un rapport molaire supérieur à 0,9:1 à 6,5:1 (acide mono-carboxylique : polyol primaire) et l'acide mono-carboxylique aliphatique est présent dans le prépolymère d'isocyanate dans une plage de plus de 7,2 à 55 % en poids sur la base du poids total du prépolymère d'isocyanate ; et
> un composant polyol qui comporte :

20 à 80 % en poids d'un polyol hydrophobe ;

3 à 15 % en poids d'un polyol à modification phosphate ; et

10 à 30 % en poids d'un polyol de polyuréthane d'huile végétale, dans lequel le % en poids est basé sur le poids total du composant polyol et le % en poids du polyol hydrophobe, du polyol modifié par phosphate et du polyol de polyuréthane d'huile végétale ne dépassent pas 100 % en poids.

2. Adhésif de polyuréthane selon la revendication 1, dans lequel le polyesterpolyol à base d'acide non dimérique a une hydroxyle fonctionnalité de 1,8 à 2,3.

3. Adhésif de polyuréthane selon l'une quelconque des revendications 1 à 2, dans lequel le polyol de polyester à base d'acide non dimérique a un indice d'acide de 5 mg KOH/g ou moins, tel que mesuré selon la norme ASTM D974.

4. Adhésif de polyuréthane selon l'une quelconque des revendications 1 à 3, dans lequel l'acide mono-carboxylique aliphatique est choisi dans le groupe constitué d'acide oléique, d'acide stéarique, d'acide laurique et de combinaisons de ceux-ci.

5. Adhésif de polyuréthane selon l'une quelconque des revendications 1 à 4, dans lequel il comporte en outre 5 % en poids à 20 % en poids d'un polyol de polyéther.

6. Adhésif de polyuréthane selon l'une quelconque des revendications 1 à 5, dans lequel le polyol hydrophobe est de l'huile de ricin.

7. Adhésif de polyuréthane selon l'une quelconque des revendications 1 à 6, dans lequel l'adhésif de polyuréthane a un indice d'isocyanate de 1,05 à 1,85.

8. Adhésif de polyuréthane selon l'une quelconque des revendications 1 à 7, dans lequel l'acide dicarboxylique d'acide non dimérique est choisi dans le groupe constitué d'acide adipique, d'acide isophtalique et des combinaisons de ceux-ci.

9. Structure multicouche comprenant :

un premier substrat ;

un second substrat ; et

une couche adhésive entre le premier substrat et le second substrat, la couche adhésive étant formée à partir de l'adhésif de polyuréthane selon l'une quelconque des revendications 1 à 8, dans lequel le premier substrat est un film monocouche ayant une couche unique qui est une couche de feuille métallique et le second substrat est un film monocouche ayant une couche unique qui est une couche de feuille métallique.

10. Batterie comprenant l'adhésif de polyuréthane selon l'une quelconque des revendications 1 à 8.

**EP 4 605 484 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109609081 A
- WO 2015168670 A1